(19) Europäisches Patentamt
European Patent Office
Office européen des brevets

(11) **EP 3 961 800 A1**

(12) **EUROPEAN PATENT APPLICATION**

(43) Date of publication:
**02.03.2022 Bulletin 2022/09**

(21) Application number: **21193317.1**

(22) Date of filing: **26.08.2021**

(51) International Patent Classification (IPC):
**H01M 50/538** (2021.01)   **H01M 50/54** (2021.01)
**H01M 50/536** (2021.01)   **H01M 10/0585** (2010.01)
**H01M 10/0587** (2010.01)

(52) Cooperative Patent Classification (CPC):
**H01M 50/538; H01M 10/0585; H01M 10/0587;
H01M 50/536; H01M 50/54**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.08.2020 CN 202010900497**

(71) Applicant: **BYD Company Limited
Shenzhen, Guangdong 518118 (CN)**

(72) Inventors:
• **WANG, Xinyue
Shenzhen, 518118 (CN)**
• **ZHANG, Da
Shenzhen, 518118 (CN)**
• **LUO, Wen
Shenzhen, 518118 (CN)**

(74) Representative: **DehnsGermany Partnerschaft
von Patentanwälten
Theresienstraße 6-8
80333 München (DE)**

(54) **BATTERY AND BATTERY PACK**

(57) The present invention provides a battery and a battery pack. The battery includes a cell. The cell has at least one pole core. Each pole core has a plurality of tabs. The plurality of tabs are converged and then soldered to a cover plate of the battery to form a solder joint. When the pole core is parallel to the cover plate before convergence or after the pole core is unfolded, a spacing between the pole core and the solder joint is determined by a thickness of the pole core, a tab bending angle of the tab, and a width of a tab protection plate at the solder joint.

FIG. 2

## Description

## FIELD

The present invention relates to the field of batteries, and in particular, to a battery and a battery pack having same.

## BACKGROUND

In the related art, a plurality of tabs of a pole core are converged and then soldered together. The position of the solder joint affects the length of the tab free region. When the pole core is parallel to the cover plate before convergence or after the pole core is unfolded, if the spacing between the pole core and the mid-point position of the solder joint is designed too small, the tab is easily pulled after bending, which causes the tab to be torn, resulting in that some electrode plates cannot output electricity, leading to capacity loss of the cell.

If the spacing between the pole core and the mid-point position of the solder joint is designed too large, the movable length of the tab is increased, and a larger bending space is required in order to accommodate the tab. However, the larger bending space leads to capacity loss of the cell. If the bending space is not increased, the tab will be compressed, which is likely to cause the positive and negative electrodes to come into contact with each other, endangering the safety of the battery.

## SUMMARY

The present invention aims to resolve at least one of the technical problems existing in the prior art. In view of this, an objective of the present invention is to propose a battery, which can prevent the tab from being pulled after bending, can avoid the capacity loss of the cell, and can also prevent the tab from being compressed. thereby improving the safety of the battery.

The invention is set out in the appended set of claims. Provided are a battery and a battery pack according to the independent claims; dependent claims relate to preferred embodiments..

The battery according to the present invention includes a cell, where the cell has at least one pole core, each pole core has a plurality of tabs, the plurality of tabs are converged and then soldered to a cover plate of the battery to form a solder joint, and when the pole core is parallel to the cover plate before convergence or after the pole core is unfolded, a spacing between the pole core and the solder joint is determined by a thickness of the pole core, a tab bending angle of one or more tab the plurality of tabs, and a width of a tab protection plate at the solder joint.

The battery according to the present invention offers a more desirable spacing between the pole core and the solder joint, which can prevent the tab from being pulled after bending, and can prevent the tab from being torn, so as to avoid capacity loss of the cell; and also offers a desirable movable length of the tab and a desirable bending space, so as to avoid capacity loss of the cell, and prevent the tab from being compressed, thereby improving the safety of the battery in use.

Preferably, the spacing between the pole core and the solder joint is $L_1$, the thickness of the pole core is D, the width of the tab protection plate is $d_1$, the tab bending angle of the one or more tab is A, and the following relational expression is satisfied: $L_1 = D/2 * \tan A + d_1/2$.

More preferably, $45° \leq A \leq 135°$.

Preferably, when the pole core is parallel to the cover plate before convergence or after the pole core is unfolded, a tab free region is formed between the pole core and the solder joint, and a length of the tab free region is determined by a tab lead-out manner of the pole core. The term 'tab free region' as used in the present application refers to a free region of the plurality of tabs, i.e. a region in which the tabs extend without out being (directly) restricted and/or fixed by the pole core or the solder joint. Instead of the term 'tab free region' the term 'bending space' or 'bending space of the tabs" can be used, as the tab free region is the region in which the tabs bend between their restriction/fixation at the pole core and the solder joint.

Preferably, the pole core is constructed as a wound pole core, and when the tab extends out from the pole core in a tab semi-lead-out manner, the thickness of the pole core is D, a length by which the tab extends out from the pole core in an extension direction of the tab is $L_2$, the length of the tab free region is $L_3$, and the following relational expression is satisfied: $0.25D < L_3 < L_2$.

Preferably, when the tab extends out from the pole core in a tab fully-lead-out manner, the thickness of the pole core is D, a length by which the tab extends out from the pole core in an extension direction of the tab is $L_2$, the length of the tab free region is $L_3$, and the following relational expression is satisfied: $0.5D < L_3 < L_2$.

Preferably, the plurality of tabs converge and form a tab converging and lead-out position, and in a thickness direction of the pole core, the tab converging and lead-out position includes a zero lead-out position, an intermediate lead-out position, and a biased lead-out position; and the tab converging and lead-out position is located at the zero lead-out position or the biased lead-out position.

Preferably, the plurality of tabs converge and form a tab converging and lead-out position, and in a thickness direction of the pole core, the tab converging and lead-out position includes a zero lead-out position, an intermediate lead-out position, and a biased lead-out position; and the tab converging and lead-out position is located at the intermediate lead-out position.

Preferably, the width of the tab protection plate is 8-12 mm.

Preferably, the solder joint is disposed in a solder joint region of the tab, the solder joint region includes an ultrasonic soldering region and a laser soldering region, and the laser soldering region is located inside the ultrasonic soldering region.

In some examples of the present invention, a width of the ultrasonic soldering region in the extension direction of the tab is 4-8 mm.

The battery pack according to the present invention includes the above-mentioned battery.

The additional aspects and advantages of the present invention will be set forth in part in the description below, parts of which will become apparent from the description below, or will be understood by the practice of the present invention.

**BRIEF DESCRIPTION OF THE DRAWINGS**

These and other aspects and advantages of the present invention will become apparent and more readily appreciated from the following descriptions made with reference to the drawings, in which:

FIG. 1 is a cross-sectional view of a battery according to an embodiment of the present invention;
FIG. 2 is a schematic diagram of a battery according to an embodiment of the present invention when the pole core is parallel to the cover plate after the pole core is unfolded;
FIG. 3 is a schematic diagram showing that the pole core of the battery is located at the zero lead-out position according to an embodiment of the present invention;
FIG. 4 is a schematic diagram showing that the pole core of the battery is located at the biased lead-out position according to an embodiment of the present invention; and
FIG. 5 is a schematic diagram showing that the pole core of the battery is located at the intermediate lead-out position according to an embodiment of the present invention.

Reference numerals:

battery 100;
cell 10;
pole core 20; tab 201; separator 202;
cover plate 30;
solder joint 40;
zero lead-out position 50; intermediate lead-out position 60; biased lead-out position 70; pole core central axis 80;

**DETAILED DESCRIPTION**

Detailed description of the embodiments of the present invention will be made in the following, and examples thereof are illustrated in the drawings, throughout which identical or similar elements or elements of identical or similar functions are represented with identical or similar reference numerals. The embodiments that are described with reference to the accompanying drawings are exemplary, and are only used to interpret the present invention, instead limiting the present invention.

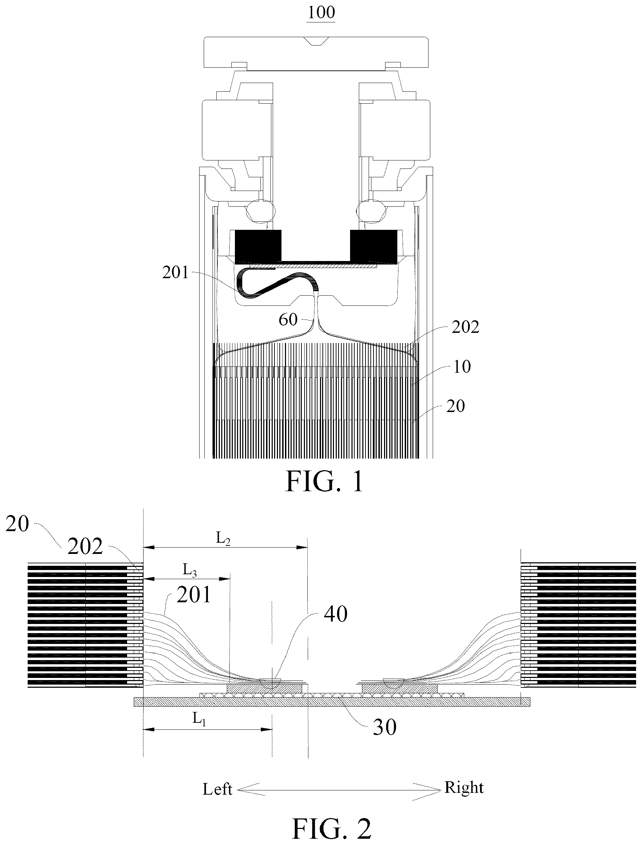

A battery 100 according to the embodiments of the present invention will be described below with reference to FIG. 1 to FIG. 5.

As shown in FIG. 1 to FIG. 5, the battery 100 includes a cell 10. The cell 10 has at least one pole core 20. Each pole core 20 has a plurality of tabs 201 (lugs). The plurality of tabs 201 are converged and then soldered to a cover plate 30 of the battery 100 to form a solder joint 40. When the pole core 20 is parallel to the cover plate 30 before convergence or after the pole core 20 is unfolded, which may be understood as that when the pole core 20 is parallel to the cover plate 30 before convergence or when the pole core 20 is parallel to the cover plate 30 after being unfolded, a spacing between the pole core 20 and the solder joint 40 is determined by a thickness of the pole core 20, a tab bending angle of the tab 201, and a width of a tab protection plate at the solder joint 40 in an extension direction of the tab 201. Tab 201 may refer to a tab of the plurality of tabs arranged at an outer part or an outer edge (as seen in the up/down directions in the figures) of the pole core 20. There may be more than one tab having this property.

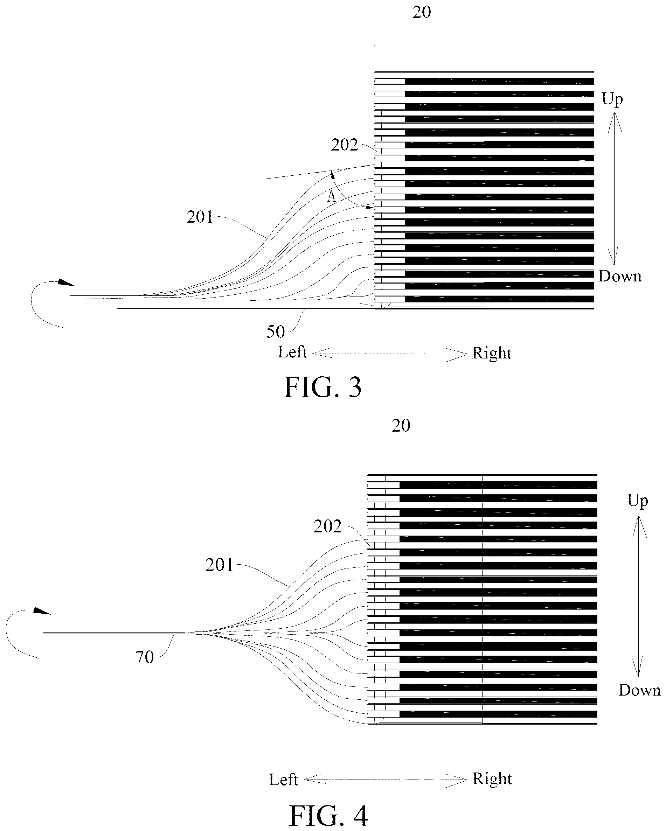

The tab protection plate is provided at the solder joint 40. Each pole core 20 has a plurality of separators 202. A spacing between an end portion of the separator 202 opposite to the solder joint 40 and the solder joint 40 is determined by the thickness of the pole core 20, the tab bending angle of the tab 201, and the width of the tab protection plate in the extension direction of the tab 201. It should be noted that the thickness direction of the pole core 20 refers to a thickness direction of the pole core 20 in FIG. 3 to FIG. 5, and the extension direction of the tab 201 refers to a left-right direction in FIG. 3 to FIG. 5.

By determining the spacing between the pole core 20 and the solder joint 40 according to the thickness of the pole core 20, the tab bending angle of the tab 201, and the width of the tab protection plate at the solder joint 40 in the extension direction of the tab 201, the present invention offers a more desirable spacing between the pole core 20 and the solder joint 40, which can prevent the tab 201 from being pulled after bending, and can prevent the tab 201 from being torn, so as to avoid the problem that some electrode plates cannot output electricity, and avoid capacity loss of the cell 1 0. The present invention also offers a desirable movable length of the tab 201 and a desirable bending space for accommodating the tab 201, so as to avoid capacity loss of the cell 10, and prevent the tab 201 from being compressed to cause the positive and negative electrodes of the cell 10 to come into contact with each other, prevent a short circuit of the cell 10, thereby improving the safety of the battery 100 in use.

In some embodiments, the spacing between the pole core 20 and the solder joint 40 is $L_1$, the thickness of the pole core 20 is D, the width of the tab protection plate is $d_1$, the tab bending angle of the tab 201 is A, and the following relational expression is satisfied: $L1=D/2*tanA+d_1/2$. The tab bending angle A of the tab 201 satisfies the following relational expression: $45°\leq A\leq 135°$. The spacing between an end portion of the separator 202 of the pole core 20 opposite to the solder joint 40 and the solder joint 40 is $L_1$. By such a setting, the present invention can further prevent the tab 201 from being pulled after bending, and can prevent the tab 201 from being torn, so as to further avoid the problem that some electrode plates cannot output electricity, and further avoid capacity loss of the cell 10. The present invention also offers a more desirable movable length of the tab 201 and a more desirable bending space for accommodating the tab 201, so as to further avoid capacity loss of the cell 10, further prevent the tab 201 from being compressed to cause the positive and negative electrodes of the cell 10 to come into contact with each other, and better prevent a short circuit of the cell 10, thereby improving the safety of the battery 100 in use.

In some embodiments, the width of the tab protection plate may be set to 8-12 mm. By such a setting, the present invention offers a desirable width of the tab protection plate, which can protect the tab 201 better, can further prevent the tab 201 from being pulled after bending, and can further prevent the tab 201 from being torn, so as to further avoid the problem that some electrode plates cannot output electricity, and further avoid capacity loss of the cell 10. The present invention also offers a more desirable movable length of the tab 201 and a more desirable bending space for accommodating the tab 201, so as to further avoid capacity loss of the cell 10, further prevent the tab 201 from being compressed to cause the positive and negative electrodes of the cell 10 to come into contact with each other, and better prevent a short circuit of the cell 10, thereby improving the safety of the battery 100 in use.

In some embodiments, when the pole core 20 is parallel to the cover plate 30 before convergence or after the pole core 20 is unfolded, which may be understood as that when the pole core 20 is parallel to the cover plate 30 before convergence or when the pole core 20 is parallel to the cover plate 30 after being unfolded, as shown in FIG. 2, in the extension direction of the tab 201, a tab free region is formed between the pole core 20 and the solder joint 40. Specifically, after the plurality of tabs 201 are converged, the tab free region is formed between the end portion of separator 202 opposite to the solder joint 40 and the solder joint 40, and the length of the tab free region is determined by the lead-out manner of the tab 201 of the pole core 20. By such a setting, the present invention offers a more desirable length of the tab free region, which can further prevent the tab 201 from being pulled after bending, and can further avoid the problem that some electrode plates cannot output electricity, and further avoid capacity loss of the cell 10.

The present invention also offers a more desirable movable length of the tab 201 and a more desirable bending space for accommodating the tab 201, so as to further avoid capacity loss of the cell 10, further prevent the tab 201 from being compressed to cause the positive and negative electrodes of the cell 10 to come into contact with each other, and better prevent a short circuit of the cell 10, thereby improving the safety of the battery 100 in use. In addition, a more desirable bending angle of the tab 201 can be ensured.

According to a specific embodiment, as shown in FIG. 3 and FIG. 4, the pole core 20 is constructed as a wound pole core 20, and when the tab 201 extends out from the pole core 20 in a tab semi-lead-out manner (where it should be noted that the tab semi-lead-out manner means that only one tab 201 is led out for each turn of the pole core 20 after the pole core 20 is wound, and the tab semi-lead-out manner is only applicable to a wound pole core 20), the thickness of the pole core 20 is D, a length by which the tab 201 extends out from the pole core 20 in the extension direction of the tab 201 is $L_2$ (which can also be understood as that a length by which the tab 201 extends out from the separator 202 in the extension direction of the tab 201 is $L_2$), the length of the tab free region is $L_3$, and the following relational expression is satisfied: $0.25D<L_3<L_2$. After the plurality of tabs 201 are soldered together, such a setting offers a desirable length of the tab free region, which can prevent the tab 201 from being torn, can prevent the tab 201 from being compressed, and can reduce the risk of short circuit in the cell 10.

In some embodiments, the plurality of tabs 201 converge and form a tab converging and lead-out position, and in a thickness direction of the pole core 20, the tab converging and lead-out position may include a zero lead-out position 50, an intermediate lead-out position 60, and a biased lead-out position 70. As shown in FIG. 3, the tab converging and lead-out position may be located at the zero lead-out position 50. As shown in FIG. 4, the tab converging and lead-out position may be located at the biased lead-out position 70. The intermediate lead-out position 60 coincides with a central axis 80 of the pole core. In the thickness direction of the pole core 20, the zero lead-out position 50 is located on an axis where the outermost layer of the pole core 20 is located. The biased lead-out position 70 is located between the zero lead-out position 50 and the intermediate lead-out position 60. The larger the thickness of the cell 10, the closer the tab converging and lead-out position is to the intermediate lead-out position 60. The smaller the thickness of the cell 10, the closer the tab 201 converging and lead-out position is to the zero lead-out position 50. Such a setting offers a desirable tab bending angle of the tab 201 suitable, and can ensure that the tab 201 does not compress the separator 202, so as to reduce the risk of damage of the separator 202, thereby reducing the risk of short circuit in the cell 10, and can improve the safety of the battery 100 in use.

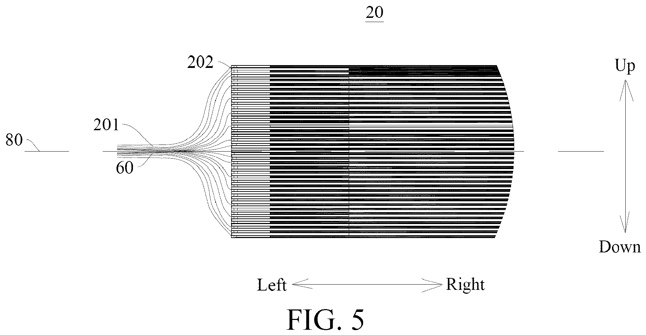

According to another specific embodiment, as shown in FIG. 5, when the tab 201 extends out from the pole core 20 in a tab fully-lead-out manner (where it should be noted that the tab fully-lead-out manner means that when the pole core 20 is a laminated pole core, each electrode plate of the pole core 20 has a tab 201 extending out therefrom; or means that when the pole core 20 is a wound pole core, each turn of electrode plate of the pole core 20 is symmetrically provided with two tabs 201 by taking the diameter of the pole core 20 as the symmetric center; the laminated pole core 20 needs to adopt the tab fully-lead-out manner, and the wound pole core 20 may or may not adopt the tab fully-lead-out manner), the thickness of the pole core 20 is D, a length by which the tab 201 extends out from the pole core 20 in the extension direction of the tab 201 is $L_2$ (which can also be understood as that a length by which the tab 201 extends out from the separator 202 in the extension direction of the tab 201 is $L_2$), the length of the tab free region is $L_3$, and the following relational expression is satisfied: $0.5D<L_3<L_2$. Such a setting offers a desirable length of the tab free region, which can prevent the tab 201 from being torn, can prevent the tab 201 from being compressed, and can reduce the risk of short circuit in the cell 10.

Further, the plurality of tabs 201 converge and form a tab converging and lead-out position, and in a thickness direction of the pole core 20, the tab converging and lead-out position includes a zero lead-out position 50, an intermediate lead-out position 60, and a biased lead-out position 70. As shown in FIG. 5, the tab converging and lead-out position may be located at the intermediate lead-out position 60. Such a setting offers a desirable tab bending angle of the tab 201 suitable, and can ensure that the tab 201 does not compress the separator 202, so as to reduce the risk of damage of the separator 202, thereby reducing the risk of short circuit in the cell 10, and can improve the safety of the battery 100 in use.

In some embodiments, the solder joint 40 may be disposed in a solder joint region of the tab 201, the solder joint region may include an ultrasonic soldering region and a laser soldering region, and the laser soldering region is located inside the ultrasonic soldering region. That is, the laser soldering region overlaps with the ultrasonic soldering region. The plurality of tabs 201 are first soldered together in the ultrasonic soldering region by ultrasonic soldering, and the plurality of tabs 201 are converged. Then the converged tabs 201 are soldered on the cover plate 30 in the laser soldering region by laser soldering. By means of such a setting, the plurality of tabs 201 can be reliably soldered to the cover plate 30, and can prevent the plurality of tabs 201 from being separated from the cover plate 30, thereby ensuring the working reliability of the battery 100.

Further, a width of the ultrasonic soldering region in the extension direction of the tab 201 is 4-8 mm. Preferably, the width of the ultrasonic soldering region is set to 6 mm. Such a setting offers a desirable width of the ultrasonic soldering region can reliably solder together the plurality of tabs 201, and can also ensure the soldering quality. It should be noted that the spacing between the pole core 20 and the solder joint refers to a spacing from the pole core 20 to the center of the laser soldering joint.

The battery pack according to the embodiments of the present invention includes the battery 100 of the above embodiments, and disposing the battery 100 in the battery pack offers a more desirable spacing between the pole core 20 and the solder joint 40, which can prevent the tab 201 from being pulled after bending, and can prevent the tab 201 from being torn, so as to avoid capacity loss of the cell 10; and also offers a desirable movable length of the tab 201 and a desirable bending space, so as to avoid capacity loss of the cell 10, and prevent the tab 201 from being compressed, thereby improving the safety of the battery 100 in use.

In the description terms such as "an embodiment", "some embodiments", "exemplary embodiments", "example", "specific example", or "some examples" means that the specific features, structures, materials or characteristics described with reference to the embodiment or example are included in at least one embodiment or example of the present invention. In this specification, exemplary descriptions of the foregoing terms do not necessarily refer to the same embodiment or example. In addition, the described specific features, structures, materials, or characteristics may be combined in a proper manner in any one or more of the embodiments or examples.

Although the embodiments of the present invention have been shown and described, a person skilled in the art can understand that changes, alternatives, and modifications can be made in the embodiments without departing from the principle and the purpose of the present invention, and the scope of the present invention is as defined by the claims and their equivalents.

## Claims

1. A battery, comprising:
   a cell, wherein the cell has at least one pole core, each pole core has a plurality of tabs, the plurality of tabs are converged and then soldered to a cover plate of the battery to form a solder joint, and when the pole core is parallel to the cover plate before convergence or after the pole core is unfolded, a spacing between the pole core and the solder joint is determined by a thickness of the pole core, a tab bending angle of one or more tab of the plurality of tabs, and a width of a tab protection plate at the solder joint.

2. The battery according to claim 1, wherein the spacing between the pole core and the solder joint is $L_1$,

the thickness of the pole core is D, the width of the tab protection plate is $d_1$, the tab bending angle of the one or more tab is A, and the following relational expression is satisfied:

$$L_1 = D/2 * \tan A + d_1/2.$$

3. The battery according to claim 2, wherein $45° \leq A \leq 135°$.

4. The battery according to claim 1, wherein when the pole core is parallel to the cover plate before convergence or after the pole core is unfolded, a tab free region is formed between the pole core and the solder joint, and a length of the tab free region is determined by a tab lead-out manner of the pole core.

5. The battery according to claim 4, wherein the pole core is constructed as a wound pole core, and when the tab extends out from the pole core in a tab semi-lead-out manner, the thickness of the pole core is D, a length by which the tab extends out from the pole core in an extension direction of the tab is $L_2$, the length of the tab free region is $L_3$, and the following relational expression is satisfied: $0.25D < L_3 < L_2$.

6. The battery according to claim 4, wherein when the tab extends out from the pole core in a tab fully-lead-out manner, the thickness of the pole core is D, a length by which the tab extends out from the pole core in an extension direction of the tab is $L_2$, the length of the tab free region is $L_3$, and the following relational expression is satisfied: $0.5D < L_3 < L_2$.

7. The battery according to claim 5, wherein the plurality of tabs converge and form a tab converging and lead-out position, and in a thickness direction of the pole core, the tab converging and lead-out position comprises a zero lead-out position, an intermediate lead-out position, and a biased lead-out position; and the tab converging and lead-out position is located at the zero lead-out position or the biased lead-out position.

8. The battery according to claim 6, wherein the plurality of tabs converge and form a tab converging and lead-out position, and in a thickness direction of the pole core, the tab converging and lead-out position comprises a zero lead-out position, an intermediate lead-out position, and a biased lead-out position; and the tab converging and lead-out position is located at the intermediate lead-out position.

9. The battery according to claim 1, wherein the width of the tab protection plate is 8-12 mm.

10. The battery according to claim 1, wherein the solder joint is disposed in a solder joint region of the tab, the solder joint region comprises an ultrasonic soldering region and a laser soldering region, and the laser soldering region is located inside the ultrasonic soldering region.

11. The battery according to claim 10, wherein a width of the ultrasonic soldering region in the extension direction of the tab is 4-8 mm.

12. A battery pack, comprising the battery according to any one of claims 1-11.

FIG. 1

Left ⟵⟶ Right

FIG. 2

FIG. 3

FIG. 4

FIG. 5

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2014 191967 A (MURATA MANUFACTURING CO) 6 October 2014 (2014-10-06) | 1-9,12 | INV. H01M50/538 |
| A | * paragraphs [0024] - [0056]; figures 1-3, 5, 7 * | 10,11 | H01M50/54 H01M50/536 H01M10/0585 |
| | ----- | | H01M10/0587 |
| X | US 2010/028770 A1 (RYU JI HEON [KR] ET AL) 4 February 2010 (2010-02-04) * paragraphs [0010] - [0023], [0031] - [0036]; figures 3-4 * | 1-9,12 | |
| | ----- | | |
| X | EP 3 396 738 A1 (LG CHEMICAL LTD [KR]) 31 October 2018 (2018-10-31) | 1-9,12 | |
| A | * paragraphs [0039] - [0056]; figures 4-8 * | 10,11 | |
| | ----- | | |
| X | US 2018/315982 A1 (DAIDOJI TAKAO [JP] ET AL) 1 November 2018 (2018-11-01) | 1-9,12 | |
| A | * paragraphs [0040] - [0050]; figures 1, 5, 6 * | 10,11 | |
| | ----- | | |

TECHNICAL FIELDS
SEARCHED      (IPC)

H01M

The present search report has been drawn up for all claims

| Place of search | Date of completion of the search | Examiner |
|---|---|---|
| Munich | 11 January 2022 | Tsipouridis, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 19 3317

This annex lists the patent family members relating to the patent documents cited in the above-mentioned European search report.
The members are as contained in the European Patent Office EDP file on
The European Patent Office is in no way liable for these particulars which are merely given for the purpose of information.

11-01-2022

| Patent document cited in search report | | Publication date | Patent family member(s) | | Publication date |
|---|---|---|---|---|---|
| JP 2014191967 | A | 06-10-2014 | NONE | | |
| US 2010028770 | A1 | 04-02-2010 | CN | 101517807 A | 26-08-2009 |
| | | | CN | 102522519 A | 27-06-2012 |
| | | | JP | 5846932 B2 | 20-01-2016 |
| | | | JP | 2008027891 A | 07-02-2008 |
| | | | JP | 2012124171 A | 28-06-2012 |
| | | | KR | 20080009351 A | 29-01-2008 |
| | | | US | 2010028770 A1 | 04-02-2010 |
| | | | WO | 2008013371 A1 | 31-01-2008 |
| EP 3396738 | A1 | 31-10-2018 | CN | 108604660 A | 28-09-2018 |
| | | | EP | 3396738 A1 | 31-10-2018 |
| | | | EP | 3641018 A1 | 22-04-2020 |
| | | | KR | 20180061681 A | 08-06-2018 |
| | | | PL | 3641018 T3 | 30-08-2021 |
| | | | US | 2019013506 A1 | 10-01-2019 |
| | | | WO | 2018101682 A1 | 07-06-2018 |
| US 2018315982 | A1 | 01-11-2018 | CN | 108292730 A | 17-07-2018 |
| | | | JP | 6779905 B2 | 04-11-2020 |
| | | | JP | WO2017090391 A1 | 13-09-2018 |
| | | | US | 2018315982 A1 | 01-11-2018 |
| | | | WO | 2017090391 A1 | 01-06-2017 |

EPO FORM P0459

For more details about this annex : see Official Journal of the European Patent Office, No. 12/82